# EUROPEAN PATENT APPLICATION

(11) **EP 3 412 433 A1**
(43) Date of publication of application: **12.12.2018**
(21) Application number: 17175149.8
(22) Date of filing: 09.06.2017
(51) Int. Cl.: B29C 65/10, B29C 69/00, B29C 47/00, E04F 15/10, B29L 31/30, B29C 65/48

(54) **METHOD FOR PRODUCING A PREFORMED THERMOPLASTIC SURFACE COVERING AND A SUCH A COVERING**

(71) Applicant: Geveko Markings Denmark A/S, 5900 Rudkobing (DK)
(72) Inventor: BJERG PRYDS, Michael, 5700 SVENDBORG (DK); CARLSEN, Morten, 5270 ODENSE (DK)
(74) Representative: AWA Sweden AB

(57) **Abstract**

Method for producing a preformed thermoplastic surface covering, the method comprising the steps of: assembling at least one sheet section from a first sheet (1a) and at least one sheet section from a second sheet (2a) into an assembly having the appearance of at least a part of the thermoplastic covering, the first and second sheets have different characteristics, such as different colours, and blowing hot gas, preferably hot air, from at least one nozzle (50) onto a major surface of the assembly thereby heating the assembly such that the at least one sheet section from the first sheet and the at least one sheet section from the second sheet partly melts and after cooling bonds together, thereby forming a preformed thermoplastic covering. The disclosure also relates to a preformed thermoplastic surface covering.

## Description

### Field of invention

The invention relates to a method for producing a preformed thermoplastic surface covering.

The invention also relates to a preformed thermoplastic surface covering.

### Technical Background

It is known to produce pre-manufactured thermoplastic markings having the shape of the total intended marking or having the shape of a part of the intended marking. Such pre-manufactured thermoplastic markings may e.g. be adapted to be placed on a road surface or the like and then be subjected to heat, e.g. by the use of a blow torch, until it reaches an almost liquefied state sufficient for it to adhere to the road surface. Pre-manufactured thermoplastic markings are e.g. known from GB-A-2 030 586, SE-B-399 575, SE-B-341 873, and US-4 708 518.

It is also known to provide pavement marking patterns composed of two or more independent sections formed from differently coloured thermoplastic materials. A hot melt adhesive spray is utilized on the bottom surface of the marking pattern to bridge the intersections between the first and second sections to maintain the integrity of the marking pattern for convenience during handling and application to a substrate. The hot melt spray adhesive has approximately the same softening point range as the pattern sections to accommodate heat treatment of the marking pattern during application of the marking pattern to the substrate. Such a pavement marking pattern is e.g. disclosed in EP 2 032 764 A1.

When applying the spray adhesive, the worker on the manufacturing site need to apply on one hand sufficient amount of spray adhesive to secure that the sections are held together and on the other hand not apply too much adhesive. Moreover, the spray adhesive needs to be applied to the areas where the sections need to be bounded together. It may in this context be noted that such markings formed of different sections are typically manufactured in numerous variants in comparably small amounts which makes it difficult to automate with retained cost-efficiency.

Thus, there is room for improvements when it comes to providing pre-manufactured or pre-formed thermoplastic markings or surface coverings having differently coloured sections.

### Summary of invention

It is an object of the invention to provide a method for providing a pre-manufactured or pre-formed thermoplastic marking or surface covering that may be used to provide a surface covering or marking having different sections with different properties, such as different colours.

This object has been achieved by a method for producing a preformed thermoplastic surface covering, the method comprising the steps of:
i. heating and extruding a first thermoplastic material composition comprising
   a) thermoplastic material,
   b) filler material, and
   c) pigment,
   thereby forming a first sheet from the first thermoplastic material composition,
ii. heating and extruding a second thermoplastic material composition comprising
   a) thermoplastic material,
   b) filler material, and
   c) pigment,
   thereby forming a second sheet from the second thermoplastic material composition,
   wherein the first and second sheets have different characteristics, such as different colours,
iii. cutting the first sheet into one or more sheet sections,
iv. cutting the second sheet into one or more sheet sections,
v. assembling at least one sheet section from the first sheet and at least one sheet section from the second sheet into an assembly having the appearance of at least a part of the thermoplastic covering,
vi. blowing hot gas, preferably hot air, from at least one nozzle onto a major surface of the assembly thereby heating the assembly such that the at least one sheet section from the first sheet and the at least one sheet section from the second sheet partly melts and after cooling bonds together, thereby forming a preformed thermoplastic covering.

By providing different sections formed of thermoplastic compositions having different characteristics, by assembling the sections into an assembly, and by blowing hot gas, preferably hot air, from at least one nozzle onto a major surface of the assembly thereby heating the assembly such that the at least one sheet section from the first sheet and the at least one sheet section from the second sheet partly melts and after cooling bonds together, thereby forming a preformed thermoplastic covering, numerous advantages has been achieved.

First of all there is no longer any need for any spray adhesive, thereby reducing material cost. Thereby, the difficulties in spraying the correct amount and in the correct places have been removed. Moreover, there is no longer any need to consider any balancing between the properties of the thermoplastic compositions and the properties of the spray adhesive.

Moreover, by bonding together the sections by blowing hot gas it is free to choose blowing hot gas over the whole area or blowing hot gas only where there is a need to provide a bonding. The method as such allows for this design choice which may be different depending upon the size of the markings or the number of markings having the same geometrical design.

Moreover, by bonding together the sections by blowing hot gas it is free to choose if the hot gas should be blown on the intended upper side or the intended lower side. In this context the intended upper side is the side that will be facing away from the surface onto which the surface covering is applied to the intended surface, such as a road surface. In case being intended for a horizontal road surface, the intended upper side will be facing upwards.

Moreover, by bonding together the sections by blowing hot gas it is free to choose the orientation of the flow of hot gas. It could be chosen to blow upwardly or downwardly.

This freedom in orientation may be used to facilitate assembly. It may e.g. be possible to assemble the different sections with the intended upper side facing upwards and then bond together the sections without having to turn them upside down.

The versatility of the method makes it easier to provide a thermoplastic surface covering in which the sections are bonded together to maintain the integrity of the preformed covering for convenience during handling and application to a substrate or surface.

Moreover, by bonding together the sections by blowing hot gas it is possible to provide a bonding throughout the material thickness in the interface between the sections.

Moreover, by bonding together the sections by blowing hot gas, the hot gas may enter into any small gaps in the interfaces between the sections thereby providing more heat to areas where there is a greater need to provide an at least partial melting to secure that the sections bond to each other.

The thermoplastic surface covering is adapted for application on surfaces, such as road surfaces, side walk surfaces, foot and bicycle way surfaces, playground surfaces, parking lot surfaces, parking house floor surfaces, or sports ground surfaces. The surface covering may also be referred to as a thermoplastic marking.

The thermoplastic surface covering is adapted to have the shape of a sheet and form a pre-manufactured thermoplastic surface covering or marking having the shape of the total intended marking or having the shape of a part of the intended marking. Such pre-manufactured thermoplastic coverings or markings may e.g. be adapted to be placed on a road surface or the like and then be subjected to heat, e.g. by the use of a blow torch, until it reaches an almost liquefied state sufficient for it to adhere to the road surface. A pre-manufactured thermoplastic surface covering or marking may also be referred to as a preformed thermoplastic surface covering or marking.

The preformed thermoplastic surface covering may have a number of different designs. It may be used to replicate repeating designs, such as layers of bricks, tiles or cobblestones. In such an instance, the first section may e.g. be a grid system replicating any substance, such as mortar between bricks or sand between cobblestones, and a plurality of second sections may be provided to replicate the bricks, tiles or stones.

The preformed thermoplastic surface covering may be used to provide horizontal signage, logos and other components. It may be used on a playground and have the design of a game board, a hop scotch, a map, an alphabet as a line or a table, a multiplication table, a line of numbers, or the like. It may basically be used for any design typically making use of more than one colour to produce the design.

It may also be noted that the characteristics being different between the first sheet and the second sheet may basically be any kind of characteristic. It need not be different colours. The difference may relate to anti-slip properties, reflectivity, wear resistance, etc. Basically the inventive method is especially useful in providing a pre-formed thermoplastic surface covering in those cases where it is difficult to provide different characteristics after the thermoplastic material has been extruded into a sheet. It is e.g. often difficult to provide different colours to different parts of the sheet, at least if you want to have uniform colouring through the thickness of the sheet to secure that the design remains intact as the surface covering is worn.

It may be noted that the first section and the second section are separate sections. Typically, the first and second sheets will be different sheets originating from two separate batches of thermoplastic composition. They may e.g. be two thermoplastic compositions that are basically the same when it comes to the choice and amount of thermoplastic material and filler material, but with different pigments thereby providing different colours. It is however also conceivable that the composition is changed during the extrusion and that the first sheet and the second sheet are actually different portions of a single sheet.

Preferred embodiments appear in the dependent claims and in the description.

The step of assembling may comprise positioning the at least one sheet section from the first sheet and at least one sheet section from the second sheet side by side on a work surface thereby forming an assembly on the work surface. Assembling the sections side by side, a preferably into abutment with each other, on a work surface facilitates assembly and may also be used for transferring the assembly to a heating station.

It may be noted that the work surface may basically be any kind of closed or open surface capable of supporting the different sections even though they have not yet been bonded together. The work surface may be a solid surface, a net, a set of rollers, a set or rods, a set of belts, such as conveyor belts. It may also be noted that the work surface may be a first work surface used in the assembling step and then the assembly may be transferred to a second work surface intended to support the assembly while hot gas is blown onto the assembly.

The hot gas or air may be blown onto the assembly from the nozzle while providing a relative motion between the assembly and the nozzle such that the nozzles move along the major surface of the assembly. By providing a relative motion it is possible to heat large coverings using comparably small and cost-effective nozzles. Moreover, by providing a relative motion one reduces the risk of getting uneven heating e.g. due to any unbalance in the nozzles heating capacity. The assembly may be moved relative to the nozzles. Alternatively, the nozzles may be moved relative to the assembly. Alternatively, both the assembly and the nozzles may be moved in a counter-movement or in a joint movement direction at different speeds.

The hot gas has preferably a temperature greater than 80° C. More preferably the hot gas has a temperature greater than 120° C. The temperature of the hot gas may, e.g. in case a gas burner is used, be up to about 1300° C. When such a hot gas from a gas burner is used, the gas burner nozzle will be used from either a long distance and/or for short time interval in order to avoid scorching. The hot gas is preferably hot air. The hot air preferably has a temperature of between 80 and 400, °C and more preferably a temperature of between 120 and 400° C. This is considered a suitable balance between on one hand being capable of providing an efficient partial melting of the thermoplastic material and on the other hand avoiding scorching the thermoplastic material.

The relative movement may be performed at a speed being between 10 and 200 cm/minute, preferably between 20 and 150 cm/minute. This is considered a suitable balance between on one hand being capable of providing an efficient partial melting of the thermoplastic material and on the other hand avoiding scorching the thermoplastic material.

The nozzle has an exit mouth for the hot gas being positioned at a distance of between 1 and 50 mm, preferably between 1 and 20 mm, from the major surface of the assembly. Such a distance is especially useful when the temperature of the hot gas, preferably hot air, is between 80 and 400°C, and more preferably between 120 and 400° C. In case higher temperatures of the gas is used, such as when using a gas burner, it is contemplated that the distance will be about 100mm or more. This is considered a suitable balance between on one hand being capable of providing an efficient partial melting of the thermoplastic material and on the other hand avoiding scorching the thermoplastic material.

The thermoplastic material may be chosen from the group consisting of thermoplastic resins and thermoplastic polymers. Such materials are suitable for mixing with filler and pigments to provide a wear resistant road marking. The resin may e.g. be petrochemical based and/or colophony based. The polymers may e.g. be EVA or SIS.

Preferably the thermoplastic material constitutes between 5-90% by weight of the thermoplastic material composition. More preferably the thermoplastic material constitutes between 5-40% of the thermoplastic material composition.

The pigment is preferably chosen from the group consisting of TiO2, organic pigments and inorganic pigments. The organic pigment may e.g. be PY13. The inorganic pigments may e.g. be PB29.

The pigment of the first thermoplastic composition may be different from the pigment of the second thermoplastic composition such that the first sheet and the second sheet have different colours. This way the different sections will have different colours which open up for numerous different designs of the thermoplastic surface covering.

The filler may comprise, preferably mainly comprises, inorganic substances. The filler may e.g. be chosen from the group comprising, and may preferably mainly comprise, Dolomite, CaCO3, sand and/or chalk. These fillers are considered cost-effective and suitable to use when providing a wear resistant marking, such as a road marking.

The filler may constitute between 10-95%, preferably between 60-95% by weight of the thermoplastic material composition. These amounts are considered cost-effective and suitable to use when providing a wear resistant marking, such as a road marking.

The thermoplastic material compositions may be extruded to form the first sheet and the second sheet each having a material thickness of between 1 mm and 8mm, preferably between 2mm and 8mm. Such a thickness is considered useful in providing a wear resistant surface covering.

The second sheet preferably has a material thickness being between 75% and 125%, and more preferably between 90% and 110%, of the material thickness of the first sheet. By providing materials having about the same thickness it becomes easier to provide a strong bonding and affecting the different sections close to similar, thereby reducing the risk of any distortion of the design during the heating and the following cooling. However, one advantage with by heating by blowing hot gas is that it is possible to have different material thicknesses of the different sections. It is e.g. possible to position the sections with the intended underside onto the work surface (thereby aligning the level of the intended undersides) and then blow hot gases onto the intended upper side or through openings in the work surface onto the intended underside.

The above object has also been achieved by a preformed thermoplastic surface covering formed of
at least one section from a first sheet of a first thermoplastic material composition comprising
a) thermoplastic material,
b) filler material, and
c) pigment,
and at least one section from a second sheet for a second thermoplastic material composition comprising
a) thermoplastic material,
b) filler material, and
c) pigment,
wherein the first and second sheets have different characteristics, such as different colours,
wherein the at least one section from the first sheet and the at least one section from the second sheet has been assembled into an assembly and bonded together by blowing hot gas, preferably hot air, from at least one nozzle onto a major surface of the assembly thereby heating the assembly such that the at least one section from the first sheet and the at least one section from the second sheet has partly melted and after cooling has bonded together.

The advantages of this preformed thermoplastic surface covering, the different use cases and different embodiments thereof, has been discussed above with reference to the method and reference is made to that discussion.

In short the invention may also be said to relate to a method for producing a preformed thermoplastic surface covering, the method comprising the steps of:
assembling at least one sheet section from the first sheet and at least one sheet section from the second sheet into an assembly having the appearance of at least a part of the thermoplastic covering, the first and second sheets have different characteristics, such as different colours, and
blowing hot gas, preferably hot air, from at least one nozzle onto a major surface of the assembly thereby heating the assembly such that the at least one sheet section from the first sheet and the at least one sheet section from the second sheet partly melts and after cooling bonds together, thereby forming a preformed thermoplastic covering

### Brief description of the drawings

The invention will by way of example be described in more detail with reference to the appended schematic drawings, which shows a presently preferred embodiment of the invention.
Figure 1 schematically indicates a method for producing thermoplastic surface coverings.

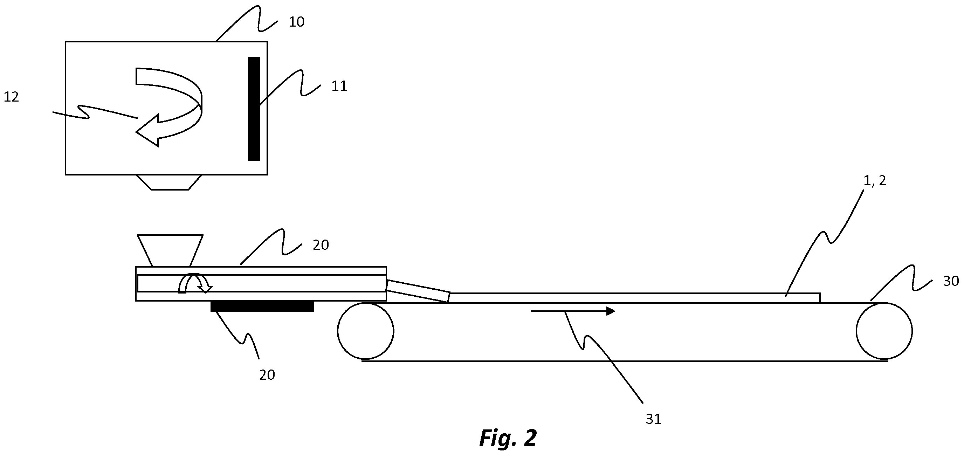

Figure 2 schematically discloses an apparatus for extrusion of thermoplastic composition thus forming a sheet.
Figure 3 is a planar view of a plurality of different sections assembled into an assembly on a work surface.
Figure 4 is a cross-section of the assembly of figure 3 as seen along line IV-IV in figure 3.
Figure 5 is a planar view of an apparatus in which hot gas is blown onto the assembly.
Figure 6 is a side view of the apparatus of figure 5.

### Detailed description of preferred embodiments

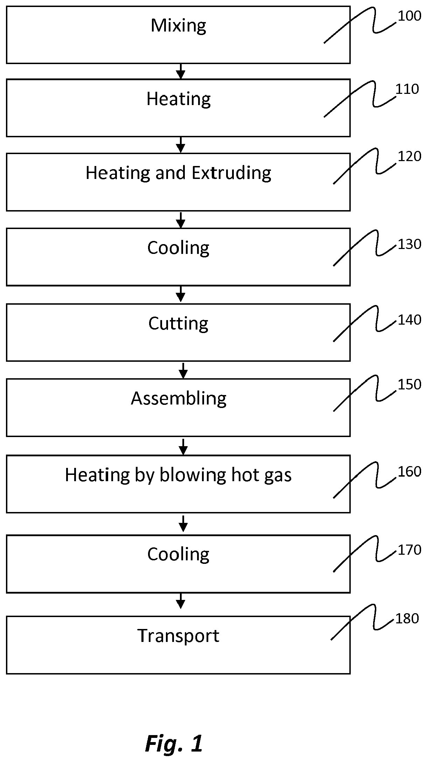

As is briefly indicated in Figure 1, the method in short comprises a mixing step 100 in which the different constituents of the thermoplastic marking are brought together. The constituents include a) thermoplastic material, b) filler material, and c) pigment. Other constituents, such as glass beads, friction material or the like may also be mixed into the material composition at this point.

After or during mixing 100 there is typically a heating step 110. After the constituents have been mixed 100 and optionally preheated 110 they are introduced into an extruder 20. In the extruder 20, the thermoplastic material composition is typically heated and extruded 120. The extruder may be a so-called screw extruder forcefully extruding the material out of the extruder. The extruder may also heat the thermoplastic material to such an extent that the material may basically be poured out of the extruder more or less using gravity as the extruding force. The material may e.g. be smeared out on the conveyor using a blade.

The thermoplastic material composition 1, 2 is extruded from the extruder 20 onto a conveyor 30. The thermoplastic material composition has an exit temperature of between 100-190 °C when leaving the extruder. The thermoplastic material composition 1 may be extruded to a material thickness t of between 1 mm and 8mm, preferably between 2mm and 8mm. The second thermoplastic material composition 2 may be extruded to a material thickness t of between 1 mm and 8mm, preferably between 2mm and 8mm.

It may be noted that typically, the mixing and extrusion of the first and second material compositions will be separate procedures. They may be separate in time and/or by using different apparatuses. However, they may also be produced somewhat together. It is e.g. possible to use a single master batch of a single thermoplastic composition and then dividing the master batch into two or more fractions and then adding different pigments to the different fractions and then extruding the different fractions into different sheets of different colours.

After extrusion 120 onto the conveyor 30, the material 1, 2 is typically allowed to cool 130 to room temperature. Thereafter, the sheets 1, 2 are transported to a cutting station in which sections are cut 140 from the sheets 1, 2. The cutting station may e.g. be a station in which different sections are cut out of the sheets 1, 2 using a high pressure water jet or the like. The cutting may also be mechanical using a cutting tool, such as a stamping tool acting against a die.

Thereafter the cut-out sections are transferred to a work surface 40 onto which the sections 1, 2 are assembled 150 by being positioned side by side into an assembly having the appearance of the desired design.

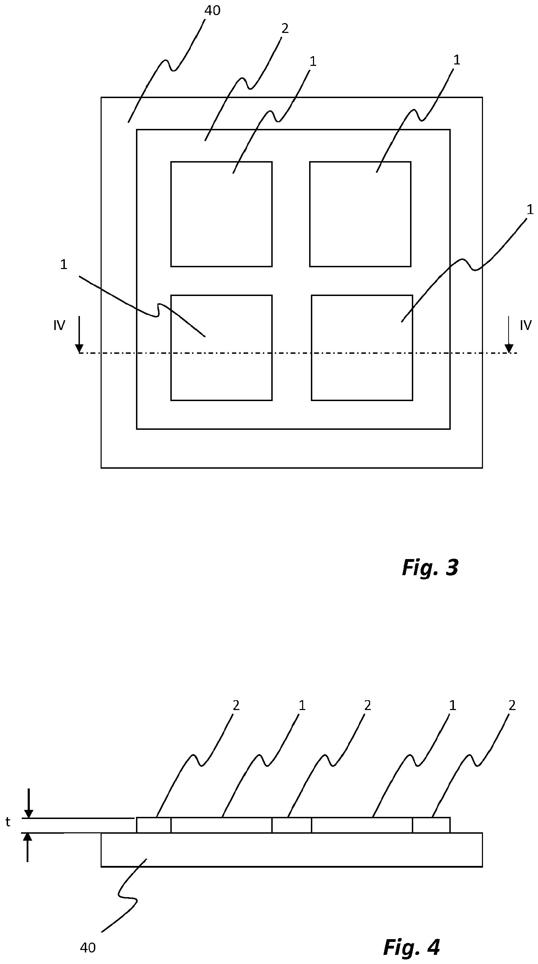

In figure 3, the assembly is shown from above. In figure 4, the assembly is shown in cross-section along line IV-IV in figure 3.

The assembly shown in figure 3 is formed of four square sections of a first thermoplastic composition 1 inside an outer square 2 of a second thermoplastic material 2. The first sections 1 may have a first colour and the second section 2 may have different colour. As seen in figure 4, the sections 1 fits in cut-outs in the outer section 2. In the shown design, the cut-outs in the second section 2 are cut-out through the complete thickness of the section 2. Thereby, the inner sections 1 will extend through the second section 2 and will form both upper side and lower side of the assembly. However, it is also conceivable that the sections 1 are positioned in recesses in the second section 2, the recesses formed by cut-outs having a depth being smaller than the material thickness of the second section.

The assembly on the work surface 40 is then heated by blowing 160 hot gas, preferably hot air, from at least one nozzle 50 onto a major surface 1 a, 2a of the assembly thereby heating the assembly such that the at least one section 1 from the first sheet and the at least one section 2 from the second sheet partly melts.

Thereafter the blowing 160 ends and the partly melted sections are allowed to cool whereby the partly melted sections bonds together, thereby forming a preformed thermoplastic covering.

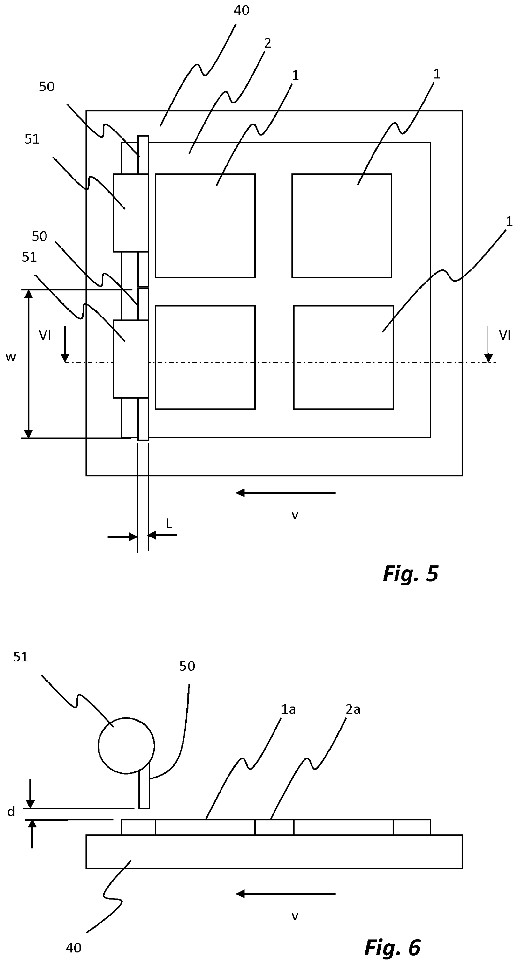

The hot gas or air may be blown onto the assembly from the nozzle 50 while moving the assembly relative to the nozzle 50 such that the nozzles 50 move along the major surface 1 a, 2a of the assembly. This may e.g. be accomplished by moving the work surface 40 as indicated by arrow v in figures 5 and 6.

The hot gas, which preferably is hot air, may have a temperature of between 80°C and 400°C and more preferably between 120 and 400 °C. In a preferred embodiment, the temperature is 300 °C. The hot air may e.g. be provided by fans 51 such as fans provided with integrated electrical heaters. The hot air may also be provided using fans blowing air or gas which has been heated by other means, such as by burning of a gas.

Each part of the thermoplastic material in the assembly is subjected to the hot gas or air during a time period of about 0,1 to 10 seconds, preferably about 0,5 to 5 seconds. In a preferred embodiment, each part of the thermoplastic material is subjected to the hot gas or air during a time period of about 2 seconds.

The relative movement v may be performed at a speed being between 10 and 200 cm/minute, preferably between 20 and 150 cm/minute. In a preferred embodiment the relative speed is about 70 cm/minute.

The nozzles 50 have an extension L along the travel direction v being between 0,5 and 5 cm. In a preferred embodiment, the nozzles 50 have an extension along the travel direction being about 1 cm.

The nozzle has an exit mouth for the hot gas being positioned at a distance d of between 1 mm and 50mm, preferably between 1 mm and 20mm, from the major surface 1 a, 2a of the assembly. In a preferred embodiment, the distance is about 2mm.

The total width of the nozzles is preferably chosen such that the complete width of the assembly may be covered in a single passing.

After blowing hot air onto the assembly and allowing it to partly melt together the material is allowed to cool 170. This may be cooling by allowing it to rest at room temperature. It may alternatively be active cooling, e.g. by blowing air, such as cold air onto the assembly. This may be in line with the heaters 50, 51 or be performed as a separate step. Preferably, the cooling is performed while the assembly is on the same work surface 40, such as on the same conveyor, such that the assembly may bond together and form a strong preformed thermoplastic surface covering.

This strong preformed thermoplastic surface covering may then be transported 170 and easily be positioned as a single unit on the site of application.

On the site of application, the pre-manufactured thermoplastic coverings or markings may be placed on a road surface or the like and then be subjected to heat, e.g. by the use of a blow torch, until it reaches an almost liquefied state sufficient for it to adhere to the road surface. Thereafter the marking is allowed to cool and solidify and a thermoplastic marking with an elaborate design has been provided on a road or playground or the like.

The thermoplastic material may be chosen from the group consisting of thermoplastic resins and thermoplastic polymers. Such materials are suitable for mixing with filler and pigments to provide a wear resistant road marking. The resin may e.g. be petrochemical based and/or colophony based. The polymers may e.g. be EVA or SIS.

Preferably the thermoplastic material constitutes between 5-90% by weight of the thermoplastic material composition. More preferably the thermoplastic material constitutes between 5-40% of the thermoplastic material composition.

The pigment is preferably chosen from the group consisting of TiO2, organic pigments and inorganic pigments. The organic pigment may e.g. be PY13. The inorganic pigments may e.g. be PB29.

The pigment of the first thermoplastic composition may be different from the pigment of the second thermoplastic composition such that the first sheet and the second sheet have different colours. This way the different sections will have different colours which open up for numerous different designs of the thermoplastic surface covering.

The filler may comprise, preferably mainly comprises, inorganic substances. The filler may e.g. be chosen from the group comprising, and may preferably mainly comprise, Dolomite, CaCO3, sand and/or chalk.

The filler may constitute between 10-95%, preferably between 60-95% by weight of the thermoplastic material composition. These amounts are considered cost-effective and suitable to use when providing a wear resistant marking, such as a road marking.

The second sheet preferably has a material thickness being between 75% and 125%, and more preferably between 90% and 110%, of the material thickness of the first sheet.

A result of this method is a preformed thermoplastic surface covering formed of
at least one section from a first sheet of a first thermoplastic material composition comprising
a) thermoplastic material,
b) filler material, and
c) pigment,
and at least one section from a second sheet for a second thermoplastic material composition comprising
a) thermoplastic material,
b) filler material, and
c) pigment,
wherein the first and second sheets have different characteristics, such as different colours,
wherein the at least one section from the first sheet and the at least one section from the second sheet has been assembled into an assembly and bonded together by blowing hot gas, preferably hot air, from at least one nozzle onto a major surface of the assembly thereby heating the assembly such that the at least one section from the first sheet and the at least one section from the second sheet has partly melted and after cooling has bonded together.

It is contemplated that there are numerous modifications of the embodiments described herein, which are still within the scope of the invention as defined by the appended claims.

It may e.g. be noted that the thermoplastic material composition may be provided with retroreflective material, such as coated and/or non-coated glass beads, intermixed with the thermoplastic material composition.

It may e.g. be noted that the thermoplastic material composition may be provided with anti-slip material, such as so-called grit e.g. forming a fraction of the filler material, intermixed with the thermoplastic material composition.

It may also be noted that the retroreflective material, such as the coated and/or non-coated glass beads may as an alternative or as a complement be provided on the top surface of the one or more of the sections of the assembly. This may e.g. be performed by adding so-called drop-on beads on the sheets when the sheets have been extruded. The provision of drop-on beads may alternatively or as a complement be performed on the assembly in connection with the blowing hot gas, preferably hot air, from at least one nozzle onto a major surface of the assembly thereby heating the assembly such that the at least one sheet section from the first sheet and the at least one sheet section from the second sheet partly melts and after cooling bonds together, thereby forming a preformed thermoplastic covering. The drop-on beads may e.g. be dropped onto the top surface of the assembly before the assembly is subjected to the blowing of hot gas, whereby the beads will sink slightly into the partly melted sheets and thereby be bonded to the top-surface of the preformed thermoplastic covering. Alternatively, or as a complement, the provision of drop-on beads may be performed on the site of application when the road worker heats the performed thermoplastic covering for attaching it to the base surface, such as a road surface.

It may also be noted that the anti-slip material may as an alternative or as a complement be provided on the top surface of the one or more of the sections of the assembly. This may e.g. be performed by adding the anti-slip material on the surface of the sheets when the sheets have been extruded. The provision of anti-slip material may alternatively or as a complement be performed on the assembly in connection with the blowing hot gas, preferably hot air, from at least one nozzle onto a major surface of the assembly thereby heating the assembly such that the at least one sheet section from the first sheet and the at least one sheet section from the second sheet partly melts and after cooling bonds together, thereby forming a preformed thermoplastic covering. The anti-slip material may e.g. be dropped onto the top surface of the assembly before the assembly is subjected to the blowing of hot gas, whereby the anti-slip material will sink slightly into the partly melted sheets and thereby be bonded to the top-surface of the preformed thermoplastic covering. Alternatively, or as a complement, the provision of anti-slip material may be performed on the site of application when the road worker heats the performed thermoplastic covering for attaching it to the base surface, such as a road surface.

## Claims

1. Method for producing a preformed thermoplastic surface covering, the method comprising the steps of:
i. heating and extruding a first thermoplastic material composition comprising
a) thermoplastic material,
b) filler material, and
c) pigment,
thereby forming a first sheet from the first thermoplastic material composition,
ii. heating and extruding a second thermoplastic material composition comprising
a) thermoplastic material,
b) filler material, and
c) pigment,
thereby forming a second sheet from the second thermoplastic material composition,
wherein the first and second sheets have different characteristics, such as different colours,
iii. cutting the first sheet into one or more sheet sections,
iv. cutting the second sheet into one or more sheet sections,
v. assembling at least one sheet section from the first sheet and at least one sheet section from the second sheet into an assembly having the appearance of at least a part of the thermoplastic covering,
vi. blowing hot gas, preferably hot air, from at least one nozzle onto a major surface of the assembly thereby heating the assembly such that the at least one sheet section from the first sheet and the at least one sheet section from the second sheet partly melts and after cooling bonds together, thereby forming a preformed thermoplastic covering.

2. Method according to claim 1, wherein the step of assembling comprises positioning the at least one sheet section from the first sheet and at least one sheet section from the second sheet side by side on a work surface thereby forming an assembly on the work surface.

3. Method according to claim 1 or 2, wherein the hot gas is blown onto the assembly from the nozzle while providing a relative motion between the assembly and the nozzle such that the nozzles move along the major surface of the assembly.

4. Method according to any one of claims 1-3, wherein the hot gas, preferably hot air, has a temperature of between 80 and 400 °C, and more preferably between 120 and 400°C.

5. Method according to claim 3 or 4, wherein the relative movement is performed at a speed being between 10 cm/minute and 200 cm/minute.

6. Method according to any one of claims 1-5, wherein the nozzle has an exit mouth for the hot gas being positioned at a distance of between 1 mm and 50mm, preferably between 1 mm and 20mm, from the major surface of the assembly.

7. Method according to any one of claims 1-6, wherein the thermoplastic material is chosen from the group consisting of thermoplastic resins and thermoplastic polymers.

8. Method according to any one of claims 1-7, wherein the thermoplastic material constitutes between 5-90%, and preferably between 5-40% by weight of the thermoplastic material composition.

9. Method according to any one of claims 1-8, wherein the pigment is chosen from the group consisting of TiO2, organic pigments and inorganic pigments.

10. Method according to any one of claims 1-9, wherein the pigment of the first thermoplastic composition is different from the pigment of the second thermoplastic composition such that the first sheet and the second sheet have different colours.

11. Method according to any one of claims 1-10, wherein the filler material comprises, preferably mainly comprises inorganic substances.

12. Method according to any one of claims 1-11, wherein the filler material is chosen from the group comprising, preferably mainly comprises, Dolomite, CaCO3, sand and chalk.

13. Method according to any one of claims 1-12, wherein the filler constitutes between 10-95%, preferably between 60-95% by weight of the thermoplastic material composition.

14. Method according to anyone of claims 1-13, wherein the thermoplastic material compositions are extruded to form the first sheet and the second sheet each having a material thickness of between 1 mm and 8mm, preferably between 2mm and 8mm, the second sheet preferably having a material thickness being between 75% and 125%, and more preferably between 90% and 110%, of the material thickness of the first sheet.

15. Preformed thermoplastic surface covering formed of
at least one section from a first sheet of a first thermoplastic material composition comprising
a) thermoplastic material,
b) filler material, and
c) pigment,
and at least one section from a second sheet for a second thermoplastic material composition comprising
a) thermoplastic material,
b) filler material, and
c) pigment,
wherein the first and second sheets have different characteristics, such as different colours,
wherein the at least one section from the first sheet and the at least one section from the second sheet has been assembled into an assembly and bonded together by blowing hot gas, preferably hot air, from at least one nozzle onto a major surface of the assembly thereby heating the assembly such that the at least one section from the first sheet and the at least one section from the second sheet has partly melted and after cooling has bonded together.
